Europäisches Patentamt

European Patent Office

Office européen des brevets

(11) Publication number: **0 274 210**
**A1**

## EUROPEAN PATENT APPLICATION

(21) Application number: 87310406.1

(51) Int. Cl.⁴ **A47J 29/02**

(22) Date of filing: **25.11.87**

(30) Priority: **02.12.86 GB 8628836**

(43) Date of publication of application:
**13.07.88 Bulletin 88/28**

(84) Designated Contracting States:
**AT BE CH DE ES FR GB GR IT LI LU NL SE**

(71) Applicant: **STANFORD COMPONENTS LIMITED**
**Stanford Industrial Estate**
**Stanford-le-Hope Essex(GB)**

(72) Inventor: **Drew, John Arthur**
**Parsonage Park Lane Ramsden Heath**
**Billericay Essex(GB)**

(74) Representative: **Ablett, Graham Keith et al**
**F.J. Cleveland & Company 40-43 Chancery**
**Lane**
**London WC2A 1JQ(GB)**

(54) **Egg cooking apparatus.**

(57) An egg (4) is mounted on support spikes (3) within two steel half shells (1) which define an egg-shaped cocoon or enclosure. An air layer (5) is interposed between the enclosure and the egg. The air layer (5) is heated to provided uniform cooking of the egg. Heating elements (6) or alternative means can be provided in order to heat the air layer (5).

FIG.1

EP 0 274 210 A1

## EGG COOKING APPARATUS

This invention relates to an egg cooking apparatus, and in particular to such apparatus for boiling eggs. For the purpose of this specification, the term "boiling eggs" should be assumed to encompass the cooking of eggs within complete shells.

A known method of producing boiled eggs comprises immersing eggs in boiling water for a selected time interval according to the cooking of the egg required. In another method, the egg is immersed in cold water which is brought to the boil. Such methods can be convenient for cooking single eggs, however, when larger quantities of eggs are required, it is necessary to immerse large numbers within boiling water and to rapidly remove those eggs at the end of the selected time interval which is difficult. Furthermore, it is common for eggs immersed in boiling water to experience considerable thermal shock causing the eggs to crack and producing an inferior boiled egg, particularly when the egg has just been removed from a refridgerator. Typically, it is found that 5% of all eggs crack when cooked in boiling water, regardless of the method. It is been found that spiking of the egg to provide a pressure release can reduce the incidence of cracking during cooking, nonetheless, leakage of internal egg matter through the pressure release point often occurs.

It will also be apparant that the aforementioned methods resort to employing water which is inherently incompatible with electrical systems. Although it is possible to cook eggs in steam, steam is also inherently incompatible with electrical systems. It should be noted that the cooking of eggs has changed little over the centuries.

It is an object of the present invention to provide an improved egg cooking apparatus which solves in at least part, some of the problems described above.

According to one aspect of the invention there is provided a method of cooking an egg comprising the steps of:-
locating an egg in a position to produce a defined region enveloping the egg; and

providing heated air in the enveloping region for cooking the egg.

According to another aspect of the invention there is provided an egg cooking apparatus comprising:-

a substantially closed enclosure having means for supporting an egg therein so that an air layer is interposed between the supported egg and the enclosure, and means for heating said air layer.

In this way, it has been found that eggs equivalent to boiled eggs can be produced with a lower failure rate relative to that experienced from conventional boiling of eggs. It has been found that the interposing of an air layer between the egg and the enclosure produces uniform heating of the egg. It is particularly important for cooking of the egg in this manner that the egg is heated uniformly because it has been found that when an egg is heated uniformly, a continuous enveloping cooked layer forms at the periphery of the egg which in effect reinforces the eggshell so as to reduce the likelihood of cracking. If the heating is non-uniform, cracking of the egg occurs. The invention therefore heats the air layer in the enclosure rather than the egg directly so as to avoid hot spots in the egg which may cause thermal shock and cracking.

In a preferred embodiment of the invention, the means to heat said air layer comprises electrical heating means. It can therefore be seen that the apparatus embodying the invention can cook an egg employing electricity only without recourse to water or steam. Thus, the present invention is inherently compatible with electrical systems and there is also no necessity to refill water vessels or to boil water. The invention therefore provides a particularly convenient and simple way of producing boiled eggs. In a convenient form of the invention, the enclosure has mounted on the periphery thereof the electrical heating elements and comprises a material sufficient to permit transfer of heat to said air layer for heating the egg. This embodiment can be simply produced, for example, from a steel enclosure having flexible heating elements mounted on the exterior surface thereof.

In an alternative embodiment of the invention, the enclosure includes input and output apertures and the means to heat said air layer comprises hot air supplied through said input and output apertures. Accordingly, it is possible to heat and cook the egg by using secondary heat from some other heat source, for example hot air blown or convected from a toaster.

In a further convenient embodiment of the invention, the enclosure is further enclosed inside a heat reflective enclosure having mounted thereon the means to heat said air layer.

In another alternative embodiment of the invention, the means to heat said air layer comprises a linear heating element located adjacent to the enclosure and rotation means are provided to rotate the enclosure to uniformly heat said air layer.

In a further embodiment of the invention, the enclosure incorporates matter heatable preferentially by microwave or the like heating and the means to heat said layer comprises a source of microwaves or the like. In this embodiment, the microwaves heats the enclosure so that heating of the egg occurs preferentially from the heating of the enclosure rather than directly from the source of microwaves or the like.

According to another aspect of the invention there is provided a toaster incorporating an egg cooking apparatus as herein before described.

According to a further aspect of the invention there is provided an array of egg cooking apparatus as herein before described. In this way, a large number of eggs can be cooked conveniently without mess.

Examples of the present invention will now be described with reference to the accompanying drawings, in which :-

Figure 1 illustrates a first embodiment of the invention,

Figure 2 illustrates a second embodiment of the invention,

Figure 3 illustrates a third embodiment of the invention,

Figure 4 illustrates a fourth embodiment of the invention,

Figure 5 illustrates a fifth embodiment of the invention,

Figure 6 illustrates an improvement of the embodiment shown in Figure 5.

In the drawings common reference numerals are employed for similar components in each embodiment.

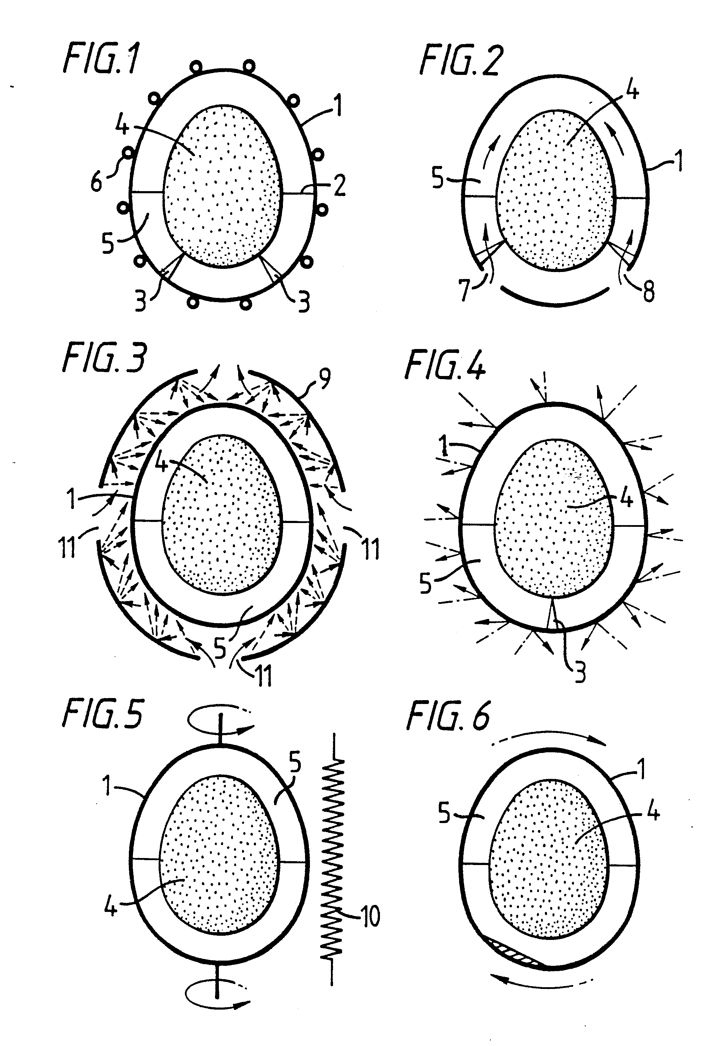

Referring to Figure 1, and enclosure 1 comprises two halves mating along a line 2 to define an egg-shaped cocoon or enclosure. The enclosure is made from a high thermal transfer material such as steel. The lower half of the enclosure 1 incorporates a number of supportive spikes 3 to support an egg thereon so that when the mating halves of the enclosure are brought together a generally uniform air layer 5 exists between the inner surfaces of enclosure 1 and an egg 4 located therein. Flexible heating elements 6 can be wound round the outer surface of the enclosure 1 and adhered thereto by adhesive or the like. The two halves of the enclosure are hinged together. Therefore, by having the two halves of the enclosure 1 hinged, a user only needs to insert an egg into the enclosure 1, locating it on the spikes 3, and shutting the enclosure. Thereafter, power can be applied to the heating elements to heat them, which in turn heats the steel of the enclosure 1, which in turn heats the air layer interposed between the supported egg and the enclosure. Accordingly, the air layer is heated uniformly so that the egg 4 is heated by the air rather than directly from the heating elements 6. The resultant uniform heating of the egg reduces cracking of the eggs during cooking. The timing for heating of the egg is dependent upon the enclosure size, the air layer depth and the heat applied by the heating elements.

Figure 2 illustrates an alternative embodiment of the invention wherein the enclosure 1 is again hinged with two halves, but the lower half incorporates apertures 7 and 8 through which hot air can be blown or convected. The hot air entering the enclosure 1 circulates around the egg 4, heating it for cooking. Once again, the uniformity of heating from the air produces uniform heating of the egg so that cracking during cooking is reduced. The spikes 3 are not shown in any further figures for the purpose of clarity. It will be apparent that the source of hot air can be conveniently obtained from another nearby appliance.

Figure 3 illustrates an alternative embodiment of the invention wherein the enclosure 1 is itself enclosed within a further enclosure 9. The further enclosure 9 comprises a material suitable for reflecting heat. Thus, hot air enters apertures 11 in the outer casing 9 and heat is reflected therefrom onto the enclosure 1 to heat the air interposed betweeen the enclosure 1 and the egg 4. Such an arrangement enhances the heating of the enclosure 1 and at the same time maintains uniformity of heating of the egg because the enclosure 1 is itself uniformly heated.

Figure 4 illustrates an enclosure 1 comprising a plastic material with the egg 4 located on a spike 3. Conveniently, the plastic case is doped to absorb a proportion of heat from microwaves which is greater than the heat absorbed by the egg. Thus, when the apparatus shown in Figure 4 is inserted in a microwave device, the microwaves preferentially heat the enclosure 1 so that uniform heating of the egg 4 occurs because the enclosure heats the air layer 5.

Referring to Figure 5, in this example, the enclosure 1 is located immediately adjacent a linear heating element 10 is rotated by means (not shown) to ensure that the exterior of the enclosure 1 is heated uniformly. As a result of the heating of the enclosure 1, heat is applied to the air layer 5 interposed between the supported egg and the enclosure so that uniform heating of the egg occurs.

Finally, Figure 6 illustrates in schematic form how the enclosure 1 supporting an egg 4 can be rotated in different directions passing before at least one fixed heat source (not shown) so that the enclosure 1 is heated uniformly which itself uniformly heats the air layer 5 interposed between the supported egg and the enclosure.

It will be therefore apparent that the present invention encompasses many alternatives wherein a substantially closed exterior enclosure is provided which supports within the enclosure an egg in spaced relation from the interior surface of the enclosure so that when heat is applied to the air interposed between the supported egg and the enclosure, by whatever means, uniform heating off the egg occurs in a manner reducing hot spots or thermal shock to the egg. Naturally, the shape of the enclosure is preferably an egg-shaped cocoon but it is not limited thereto. The present invention aims to heat the air in the enclosure rather than heating the egg directly. As a result, it is possible to devise an egg cooking apparatus having a reduced egg cracking rate during cooking compared with hitherto known egg cooking apparatus and at the same time it is possible to construct the apparatus so that heating occurs without any water, so that the apparatus is inherently compatible with electrical heating methods and apparatus. The apparatus of the invention can be constructed in large arrays or alternatively tacked onto other appliances such as a toaster. Indeed, if the apparatus in question is applied to a toaster, the means to heat the air layer can be derived from heat from use of the toaster without any danger resulting from water which would occur with prior art water based egg cooking apparatus.

## Claims

1. A method of cooking an egg comprising the steps of:-

locating an egg in a position to produce a defined region enveloping the egg; and

providing heated air in the enveloping region for cooking the egg.

2. An egg cooking apparatus comprising a substantially closed enclosure having means for supporting an egg therein so that an air layer is interposed between the supported egg and the enclosure; and means for heating said air layer.

3. Apparatus as claimed in Claim 2 wherein the means for heating said layer comprises electrical heating means.

4. Apparatus as claimed in Claim 3 wherein the electrical heating means are mounted on the external periphery of the enclosure and the enclosure comprises a material sufficient to permit transfer of heat to said air layer for heating the egg.

5. Apparatus as claimed in Claim 4 wherein the enclosure comprises a pair of mating steel cups.

6. Apparatus as claimed in Claim 2 wherein the enclosure includes input and output apertures and the means for heating said air layer comprises hot air supplied through said input and output apertures.

7. Apparatus as claimed in any one of Claims 2 to 6 wherein the enclosure is mounted within a further enclosure having a heat reflective interior surface.

8. Apparatus as claimed in Claim 2 wherein the enclosure incorporates means heatable preferentially by microwave or the like heating to produce heating of said air layer in the presence of microwaves or the like.

9. A toaster incorporating an egg cooking apparatus as claimed in any one of Claims 2 to 7.

10. An egg cooking apparatus incorporating an array of egg cooking apparatus as claimed in any one of Claims 2 to 7.

**FIG.1**

**FIG.2**

**FIG.3**

**FIG.4**

**FIG.5**

**FIG.6**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | GB-A-1 003 890 (BURGESSS PRODUCTS) * Whole document * --- | 1-5,10 | A 47 J 29/02 |
| X | US-A-2 425 199 (NAVON) * Whole document * --- | 1-5,10 | |
| X | GB-A-1 087 369 (WIJEMUNI ETON RAJAKARUNA) * Figure 6; page 4, lines 1-20; claims 1,10 * --- | 1-4,6 | |
| X | GB-A- 929 858 (WEBB) * Page 1, lines 70-74; claim 5; figures 2,3,5 * ----- | 1-6,10 | |
| | | | TECHNICAL FIELDS SEARCHED (Int. Cl.4) |
| | | | A 47 J |

The present search report has been drawn up for all claims

| Place of search | Date of completion of the search | Examiner |
|---|---|---|
| THE HAGUE | 07-03-1988 | SCHARTZ J. |